(19) Europäisches Patentamt
European Patent Office
Office européen des brevets

(11) EP 3 229 046 B1

(12) # EUROPEAN PATENT SPECIFICATION

(45) Date of publication and mention of the grant of the patent:
**29.04.2020 Bulletin 2020/18**

(21) Application number: **15865424.4**

(22) Date of filing: **20.11.2015**

(51) Int Cl.:
***G02B 5/08*** (2006.01)
***B32B 7/02*** (2019.01)
***B32B 15/09*** (2006.01)
***G02B 5/00*** (2006.01)
***G02B 27/22*** (2018.01)

(86) International application number:
**PCT/JP2015/082700**

(87) International publication number:
**WO 2016/088580 (09.06.2016 Gazette 2016/23)**

(54) **LIGHT CONTROL PANEL AND OPTICAL IMAGING DEVICE**

LICHTSTEUERUNGSTAFEL UND OPTISCHE BILDGEBUNGSVORRICHTUNG

PANNEAU DE COMMANDE DE LUMIÈRE ET DISPOSITIF D'IMAGERIE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2014 JP 2014246805**

(43) Date of publication of application:
**11.10.2017 Bulletin 2017/41**

(73) Proprietor: **Showa Denko K.K.**
**Tokyo 105-8518 (JP)**

(72) Inventors:
- **KAI Kazufumi**
**Tokyo 105-8518 (JP)**
- **OYAMA Yasuyuki**
**Oita-shi**
**Oita 870-0189 (JP)**

(74) Representative: **Strehl Schübel-Hopf & Partner**
**Maximilianstrasse 54**
**80538 München (DE)**

(56) References cited:
**WO-A1-2009/131128**
**WO-A1-2009/131128**
**WO-A1-2013/129063**
**JP-A- H07 324 123**
**JP-A- 2003 012 722**
**JP-A- 2006 111 817**
**US-A1- 2004 236 064**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a light control panel using a specific transparent resin substrate and an optical imaging device having incorporated thereinto the light control panel.

### Background Art

A glass excellent in transparency and surface hardness has heretofore been used as a substrate for a display element, such as a liquid crystal display, an organic EL display, or a touch panel. In recent years, however, an investigation has been made on the replacement of the glass with a plastic that hardly breaks and is lightweight.

In order to cause such plastic substrate to express functionality, the formation of a film of a metal or a metal oxide on the substrate has been performed. For example, a plastic substrate to which conductivity has been imparted by forming a film of indium tin oxide (ITO) has been used in a touch panel or the like. In addition, a plastic substrate to which a reflecting function has been imparted by forming a film of aluminum or silver has been applied to various applications, such as a reflecting mirror, a light control panel, and an optical imaging device. As a specific example thereof, JP 5437436 B2 (Patent Literature 1) discloses an optical imaging device using an acrylic resin.

The optical imaging device disclosed in Patent Literature 1 is an optical imaging device formed as described below. First and second light control panels each having formed therein a large number of band-shaped planar light-reflecting portions arranged vertically and at a constant pitch on a surface on one side are used, and the surfaces on one side of the first and second light control panels face each other under a state in which the planar light-reflecting portions of the first and second light control panels are made perpendicular to each other. The first and second light control panels are each formed by: laminating a large number of transparent synthetic resin plates or glass plates each having metal reflecting surfaces formed on its surfaces on both sides to produce a laminate; and cutting the laminate so that a cut-out surface vertical to the respective metal reflecting surfaces may be formed. The respective planar light-reflecting portions of the first and second light control panels are formed of the metal reflecting surfaces. In the optical imaging device, the respective surfaces on one side of the first and second light control panels each formed by arranging a large number of band-shaped planar light-reflecting portions vertically and at a constant pitch on the surface on one side face each other under a state in which the planar light-reflecting portions of the panels are made perpendicular to each other. Accordingly, light emitted from an object placed on one side of the optical imaging device converges on the other side of the optical imaging device to form an image, and hence a stereoscopic image can be projected in a space. Therefore, the optical imaging device can be applied to, for example, a stereoscopic display device, a game machine, a playing device, or a billboard.

A plastic substrate to be generally used in an optical application is, for example, a polyester (e.g., PET or PEN), a polycarbonate (PC), or an amorphous polyolefin, and such plastic has the following excellent properties: the plastic is lightweight and hardly breaks. However, such plastic has a surface hardness lower than that of a glass, and is hence more liable to be flawed than the glass is. Accordingly, the plastic involves a problem in that an inconvenience occurs in an operation during a process. In addition, even in the case where a hard coat layer is formed on a plastic film, when the surface hardness of the plastic film itself is low, a sufficient surface hardness is not obtained. Accordingly, a plastic substrate having a high surface hardness has been desired.

An acrylic resin is excellent in surface hardness, and in particular, an acrylic curable resin can be increased in surface hardness because the resin has a crosslinked structure. In, for example, JP 2011-38081 A (Patent Literature 2), there is a disclosure of a display protective plate having a pencil hardness of 2H or more obtained by curing a polyfunctional acrylate. Such acrylic substrate has a high surface hardness, but involves a problem in terms of strength because the substrate is brittle and liable to break.

US2004236064A1 describes a plastic lens material comprising an allyl ester resin. The material has excellent balance in heat resistance, impact resistance and refractive index.

### Citation List

#### Patent Literature

[PTL 1] JP 5437436 B2
[PTL 2] JP 2011-38081 A

Summary of Invention

Technical Problem

An object of the present invention is to provide a transparent resin substrate that is suitable for a light control panel and is excellent in optical characteristics, surface hardness, and strength.

Solution to Problem

The inventors of the present invention have made extensive investigations in view of such problems, and as a result, have found that the object can be achieved by using a layer of a cured product of a specific allyl ester resin composition as a transparent substrate. Thus, the inventors have completed the present invention.

That is, the present invention relates to light control panels according to the following items [1] to [4], and an optical imaging device according to the following items [5].

[1] A light control panel, including a plurality of band-shaped planar light-reflecting portions in each of which layers of a cured product of an allyl ester resin composition and metal film layers are alternately laminated in a plane direction (direction vertical to a thickness) .

[2] The light control panel according to [1] above, in which the allyl ester resin composition contains an allyl ester oligomer having a group represented by the formula (2) as a terminal group, and having a structure represented by the formula (3) as a structural unit:

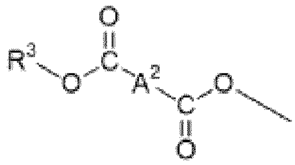

(2)

where $R^3$ represents an allyl group or a methallyl group, and $A^2$ represents one or more kinds of organic residues each having an alicyclic structure and/or an aromatic ring structure derived from a dicarboxylic acid;

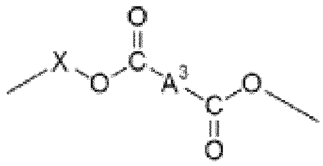

(3)

where $A^3$ represents one or more kinds of organic residues each having an alicyclic structure and/or an aromatic ring structure derived from a dicarboxylic acid, and X represents one or more kinds of organic residues each derived from a polyhydric alcohol, provided that X may further have, through an ester bond, a branched structure having a group represented by the formula (2) as a terminal group, and having a structure represented by the formula (3) as a structural unit.

[3] The light control panel according to [1] or [2] above, in which the metal film layers are each selected from aluminum, silver, and chromium.

[4] The light control panel according to any one of [1] to [3] above, in which the layers of the cured product of the allyl ester resin composition each have a thickness of from 0.2 mm to 0.5 mm.

[5] An optical imaging device, including the two light control panels described in any one of [1] to [4] above, in which the band-shaped planar light-reflecting portions of a first light control panel and a second light control panel are arranged to be perpendicular to each other.

Advantageous Effects of Invention

The cured product of the allyl ester resin composition to be used in the present invention is excellent in transparency, and has a high surface hardness and a high strength, and hence can provide a light control panel excellent in light reflectance, transparency, and strength.

Brief Description of Drawings

[FIG. 1] FIG. 1 is an explanatory view of a method of producing a light control panel.
[FIG. 2] FIG. 2 is an explanatory view for illustrating the construction of an optical imaging device.

Description of Embodiments

The present invention is described in more detail below.

[Light Control Panel]

A light control panel of the present invention includes a band-shaped planar light-reflecting portion in which a plurality of layers of a curedproduct (allyl ester resin) of an allyl ester resin composition and a plurality of metal film layers are alternately laminated in a plane direction (direction vertical to a thickness).

As illustrated in FIG. 1, a light control panel (1) is produced by: forming a metal film layer (3) on one surface, or each of both surfaces, of a sheet-shaped transparent substrate layer (cured product layer) (2); laminating a large number of pieces each obtained as described above to each other with an adhesive or the like to provide a laminate (5) in which the transparent substrate layers (2) and the metal film layers (reflective layers) (3) are alternately laminated; and then cutting the laminate (5) into a desired thickness in a direction (represented by a broken line in the figure) at a right angle to the transparent substrate layers (2) (and the metal film layers (3)). A large number of light control panels can be obtained by repeating the cutting of the laminate (5). The thickness of the light control panel, which only needs to be appropriately adjusted in accordance with its size (longitudinal and horizontal lengths), is preferably, for example, from 0.5 mm to 10 mm.

As illustrated in FIG. 2, an optical imaging device (7) of the present invention is formed by: using the two light control panels (1); and arranging a first light control panel and a second light control panel between two transparent protective plates (6) with the surfaces of both the panels facing each other so that the band-shaped planar light-reflecting portions of the panels may be perpendicular to each other.

[Allyl Ester Resin]

The light control panel of the present invention has a feature in that the allyl ester resin serving as one kind of thermosetting resin is used as a transparent substrate.

In general, the term "allyl ester resin" may refer to the following two materials: a prepolymer (containing an oligomer, an additive, and a monomer) before its curing, and a cured product thereof. In this description, however, the term "allyl ester resin" refers to a cured product and the term "allyl ester resin composition" refers to a prepolymer before its curing.

[Allyl Ester Resin Composition]

The allyl ester resin composition to be used in the present invention is a composition containing, as a main curable component, a compound having an allyl group or a methallyl group (hereinafter sometimes collectively referred to as " (meth) allyl group") and an ester structure.

The compound having a (meth) allyl group and an ester structure may be obtained by (1) an esterification reaction between a compound containing a allyl group and a hydroxy group (generally referred to as "allyl alcohol"), and a compound containing a carboxyl group, (2) an esterification reaction between a compound containing a (meth) allyl group and a carboxyl group, and a compound containing a hydroxy group, or (3) an transesterification between an ester compound formed of allyl alcohol and a dicarboxylic acid, and a polyhydric alcohol. When the compound containing a carboxyl group is a polyester oligomer of a dicarboxylic acid and a diol, only a terminal thereof can be turned into an allyl ester structure with allyl alcohol.

The ester compound formed of (meth)allyl alcohol and the dicarboxylic acid is specifically, for example, at least one kind of compound selected from compounds each represented by the formula (1) :

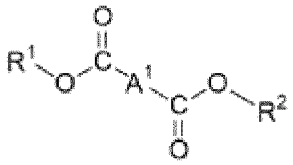

(1)

where $R^1$ and $R^2$ each independently represent one of an allyl group and a methallyl group, and $A^1$ represents one or more kinds of organic residues each having an alicyclic structure and/or an aromatic ring structure derived from the dicarboxylic acid. The compound serves as a raw material for an allyl ester oligomer to be described later. In addition, the compound may be incorporated as a reactive diluent (reactive monomer) into the allyl ester resin composition. $A^1$ in the formula (1) is preferably the same as $A^2$ in the formula (2) and $A^3$ in the formula (3) to be described later.

The compound having a (meth) allyl group and an ester structure serving as a main curable component for the allyl ester resin composition is preferably an allyl ester compound having an allyl group and/or a methallyl group as a terminal group, and having an ester structure formed of a polyhydric alcohol and a dicarboxylic acid (the compound is hereinafter sometimes described as "allyl ester oligomer").

In addition, the compound may contain, for example, a curing agent, a reactive monomer, an additive, or any other radical reactive resin component to be described later as any other component.

[Allyl Ester Oligomer]

The allyl ester oligomer to be used in the present invention is preferably a compound having a group represented by the following formula (2) as a terminal group, and having a structure represented by the following formula (3) as a structural unit:

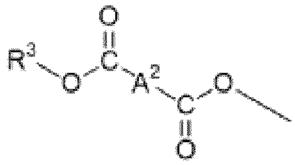

(2)

where $R^3$ represents an allyl group or a methallyl group, and $A^2$ represents one or more kinds of organic residues each having an alicyclic structure and/or an aromatic ring structure derived from a dicarboxylic acid;

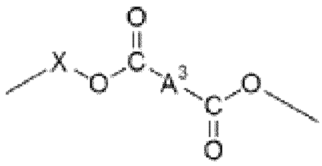

(3)

where $A^3$ represents one or more kinds of organic residues each having an alicyclic structure and/or an aromatic ring structure derived from a dicarboxylic acid, and X represents one or more kinds of organic residues each derived from a polyhydric alcohol, provided that X may further have, through an ester bond, a branched structure having a group represented by the formula (2) as a terminal group, and having a structure represented by the formula (3) as a structural unit.

In the allyl ester oligomer, the number of terminal groups each represented by the formula (2) is at least two, but in the case where X of the formula (3) has a branched structure, the number is three or more. In this case, a plurality of $R^3$' s as being respective terminal groups are also present. However, the respective $R^3$'s may not be necessarily of the same kind, and a structure in which some terminals are allyl groups and other terminals are methallyl groups is permitted.

In addition, it is not required that all $R^3$'s each represent an allyl group or a methallyl group, and part of $R^3$'s may each represent a nonpolymerizable group, such as a methyl group or an ethyl group, to the extent that the curability of the oligomer is not impaired.

The structure represented by $A^2$ may similarly vary from terminal group to terminal group. For example, a structure in which $A^2$ at one terminal represents a benzene ring and $A^2$ at another terminal represents a cyclohexane ring is permitted.

$A^2$ in the formula (2) represents one or more kinds of organic residues each having an alicyclic structure and/or an aromatic ring structure derived from a dicarboxylic acid. A portion derived from the dicarboxylic acid is represented by a carbonyl structure adjacent to $A^2$. Therefore, a portion represented by $A^2$ represents a benzene ring or a cyclohexane ring.

The dicarboxylic acid from which the $A^2$ structure is derived is not particularly limited, and terephthalic acid, isophthalic acid, phthalic acid, 1,4-cyclohexanedicarboxylic acid, 1,2-cyclohexanedicarboxylic acid, 1,4-naphthalenedicarboxylic acid, 1,5-naphthalenedicarboxylic acid, 2,7-naphthalenedicarboxylic acid, diphenyl-m,m'-dicarboxylicacid, diphenyl-p,p'-dicarboxylic acid, benzophenone-4,4'-dicarboxylic acid, p-phenylenediacetic acid, p-carboxyphenylacetic acid, methylterephthalic acid, and tetrachlorophthalic acid are preferred, and terephthalic acid, isophthalic acid, phthalic acid, and 1,4-cyclohexanedicarboxylic acid are particularly preferred in terms of ease of availability of raw materials.

In addition, at the time of the reaction, dicarboxylic acids that are acyclic, such as maleic acid, fumaric acid, itaconic acid, citraconic acid, endic anhydride, and chlorendic anhydride, may be used as long as the effect of the present invention is not impaired.

At least one structural unit represented by the formula (3) needs to be present in the allyl ester oligomer. When the molecular weight of the entirety of the allyl ester oligomer is increased to some extent by the repetition of the structural unit, a proper viscosity is obtained, and hence workability is improved and the toughness of a cured product of the oligomer is also improved. However, when the molecular weight becomes excessively large, there is a risk in that a molecular weight between crosslinking points of the cured product increases to decreases the Tg thereof, and hence the heat resistance thereof decreases. It is important that the molecular weight be adjusted to a proper value in accordance with applications.

The weight-average molecular weight of the allyl ester oligomer is preferably from 500 to 200,000, more preferably from 1,000 to 100,000.

In addition, $A^3$ in the formula (3) represents one or more kinds of organic residues each having an alicyclic structure and/or an aromatic ring structure derived from a dicarboxylic acid, and the definition thereof and examples of a preferred compound are the same as those of $A^2$ in the formula (2).

X in the formula (3) represents one or more kinds of organic residues each derived from a polyhydric alcohol.

The polyhydric alcohol is a compound having two or more hydroxy groups, and X itself represents the structure of the polyhydric alcohol excluding the hydroxy groups.

In addition, at least two hydroxy groups only need to be bonded in the polyhydric alcohol, and hence when the polyhydric alcohol serving as a raw material is trihydric or more, i.e., has three or more hydroxy groups, an unreacted hydroxy group may remain.

Specific examples of the polyol include ethylene glycol, propylene glycol, 1,3-propanediol, 1,4-butanediol, 1,3-butanediol, 1,5-pentanediol, neopentyl glycol, 1,6-hexanediol, 1,4-cyclohexane dimethanol, diethylene glycol, ethylene oxide 3 mol adduct of isocyanuric acid, pentaerythritol, tricyclodecane dimethanol, glycerin, trimethylolpropane, ethylene oxide 3 mol adduct of pentaerythritol, D-sorbitol, and hydrogenated bisphenol A. Although a method of producing each of those compounds is not particularly limited, the compound may be produced by, for example, a method disclosed in JP 06-74239 B.

With regard to a structural unit represented by the formula (3) in the allyl ester oligomer, the same structural unit may be repeated. Alternatively, different structural units may be incorporated into the oligomer, in other words, the allyl ester oligomer may be of a copolymer type. In this case, several kinds of X's are present in one allyl ester oligomer. For example, a structure in which one X represents a residue derived from propylene glycol and another X represents a residue derived from trimethylolpropane is permitted. In this case, the allyl ester oligomer branches at the portion of the trimethylolpropane residue. Several kinds may be similarly present for $A^3$. A structural formula in the case where $R^3$ represents an allyl group, $A^2$ and $A^3$ each represent a residue derived from isophthalic acid, and X's represent residues derived from propylene glycol and trimethylolpropane is shown below.

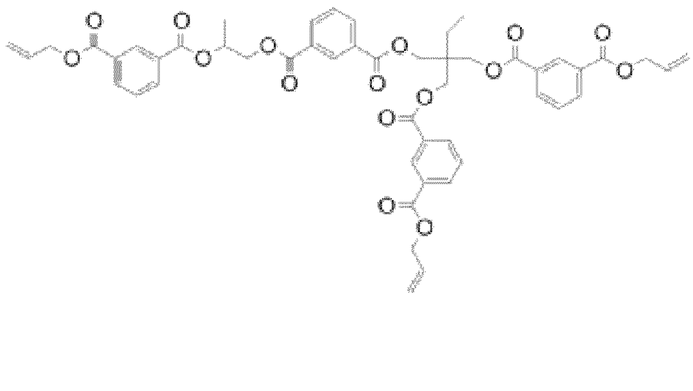

(4)

[Curing Agent]

A curing agent may be used in the allyl ester resin composition . The curing agent is not particularly limited, and general curing agents for polymerizable resins may each be used. Of such curing agents, a radical polymerization initiator is desirably added in terms of the initiation of the polymerization of an allyl group. Examples of the radical polymerization initiator include an organic peroxide, a photopolymerization initiator, and an azo compound.

Known organic peroxides, such as dialkyl peroxides, acyl peroxides, hydroperoxides, ketone peroxides, and peroxyesters, may each be used as the organic peroxide, and specific examples thereof include benzoyl peroxide, 1,1-bis(t-butylperoxy)cyclohexane, 2,2-bis(4,4-dibutylperoxycyclohexyl)propane, t-butylperoxy-2-ethylhexanoate, 2,5-dimethyl-2,5-di(t-butylperoxy)hexane, 2,5-dimethyl-2,5-di(benzoylperoxy)hexane, t-butyl peroxybenzoate, t-butylcumyl peroxide, p-methyl hydroperoxide, t-butyl hydroperoxide, cumene hydroperoxide, dicumyl peroxide, di-t-butyl peroxide, t-hexylperoxy isopropyl monocarbonate, t-butylperoxy isopropyl monocarbonate, and 2,5-dimethyl-2,5-dibutylperoxyhexyne-3.

Specific examples of the photopolymerization initiator include 2,2-dimethoxy-1,2-diphenylethan-1-one, 1-hydroxycyclohexyl phenyl ketone, benzophenone, 2-methyl-1-(4-methylthiophenyl)-2-morpholinopropane-1, 2-benzyl-2-dimethylamino-1-(4-morpholinophenyl)-butanone-1, 2-hydroxy-2-methyl-1-phenylpropan-1-one, and 2,4,6-trimethylbenzoyl diphenylphosphine oxide.

Those radical polymerization initiators may be used alone, or as a mixture thereof or in combination thereof.

Although the usage amount of any such curing agent is not particularly limited, the curing agent is used in an amount of preferably from 0.1 part by mass to 10 parts by mass, more preferably from 0.5 part by mass to 5 parts by mass with respect to 100 parts by mass of the allyl ester resin composition. When the usage amount of the curing agent is less than 0.1 part by mass, it becomes difficult to obtain a sufficient curing rate, and when the usage amount is more than 10 parts by mass, the final cured product becomes brittle and hence its mechanical strength dcreases in some cases.

[Reactive Monomer]

A reactive monomer (reactive diluent) may be added to the allyl ester resin composition for the purpose of, for example, controlling its curing reaction rate, adjusting its viscosity (improving the workability), increasing the crosslink density of a cured product of the composition, or imparting a function.

The reactive monomer is not particularly limited, and various monomers may each be used. Of those, a monomer having a radical polymerizable carbon-carbon double bond, such as a vinyl group or an allyl group, is preferred for being caused to react with the allyl ester oligomer. Examples thereof include: an unsaturated fatty acid ester; an aromatic vinyl compound; a vinyl ester of a saturated fatty acid or an aromatic carboxylic acid, and a derivative thereof; and a crosslinkable polyfunctional monomer. The use of the crosslinkable polyfunctional monomer out of those monomers can control the crosslink density of the cured product. Preferred specific examples of the reactive monomer are described below.

Examples of the unsaturated fatty acid ester include: alkyl (meth)acrylates, such as methyl (meth)acrylate, ethyl (meth)acrylate, butyl (meth)acrylate, 2-ethylhexyl (meth)acrylate, octyl (meth)acrylate, dodecyl (meth)acrylate, octadecyl (meth)acrylate, cyclohexyl (meth)acrylate, and methylcyclohexyl (meth)acrylate;
aromatic acrylates, such as phenyl (meth)acrylate, benzyl (meth)acrylate, 1-naphthyl (meth)acrylate, fluorophenyl (meth)acrylate, chlorophenyl (meth)acrylate, cyanophenyl (meth)acrylate, methoxyphenyl (meth)acrylate, and biphenyl (meth)acrylate;
haloalkyl (meth)acrylates, such as fluoromethyl (meth)acrylate and chloromethyl (meth)acrylate; and glycidyl (meth)acrylate, alkylamino (meth)acrylates, and $\alpha$-cyano acrylate.

Examples of the aromatic vinyl compound may include styrene, $\alpha$-methylstyrene, chlorostyrene, styrenesulfonic acid, 4-hydroxystyrene, and vinyltoluene.
Examples of the vinyl ester of the saturated fatty acid or the aromatic carboxylic acid and the derivatives thereof may include vinyl acetate, vinyl propionate, and vinyl benzoate.

Examples of the crosslinkable polyfunctional monomer include : di(meth)acrylates, such as ethylene glycol di(meth)acrylate, diethylene glycol di(meth)acrylate, triethylene glycol di(meth)acrylate, tetraethylene glycol di(meth)acrylate, tripropylene glycol di(meth)acrylate, 1,3-butylene glycol di(meth)acrylate, 1,4-butanediol di(meth)acrylate, 1,5-pentadiol di(meth) acrylate, 1,6-hexadiol di(meth)acrylate, neopentyl glycol di(meth)acrylate, tricyclodecane di(meth)acrylate, oligoester di(meth)acrylate, polybutadiene di(meth)acrylate, 2,2-bis(4-(meth)acryloyloxyphenyl)propane, and 2,2-bis(4-$\omega$-(meth)acryloyloxyethoxy)phenyl)propane;
aromatic carboxylic acid diallyl esters, such as diallyl phthalate, diallylisophthalate, dimethallylisophthalate, diallyl terephthalate, triallyl trimellitate, diallyl 2,6-naphthalenedicarboxylate, diallyl 1,5-naphthalenedicarboxylate, diallyl 1,4-xylenedicarboxylate, and diallyl 4,4'-diphenyldicarboxylate;
bifunctional crosslinkable monomers, such as diallyl 1,4-cyclohexanedicarboxylate, diallyl 1,2-cyclohexanedicarboxylate, diallyl 1,3-cyclohexanedicarboxylate, and divinylbenzene; trifunctional crosslinkable monomers, such as trimethylolethane tri(meth)acrylate, trimethylolpropane tri(meth)acrylate, pentaerythritol tri(meth)acrylate, tri(meth)allyl isocyanurate, tri(meth)allyl cyanurate, triallyl trimellitate, and diallyl chlorendate; and
monomers each having a crosslinkable group that is tetrafunctional or more, such as pentaerythritol tetra(meth)acrylate, ditrimethylolpropane poly (meth)acrylate, and dipentaerythritol poly(meth)acrylate.

The reactive monomers may be used alone, or as a mixture thereof or in combination thereof. Although the usage amount of any such reactive monomer is not particularly limited, the usage amount is preferably from 1 part by mass to 1, 000 parts by mass, more preferably from 2 parts by mass to 500 parts by mass, particularly preferably from 5 parts by mass to 100 parts by mass with respect to 100 parts by mass of the allyl ester oligomer. When the usage amount of the reactive monomer is less than 1 part by mass, a viscosity-reducing effect is small and hence the workability deteriorates in some cases . It is not preferred to use a monofunctional monomer as the reactive monomer because the crosslink density of the cured product decreases and hence its hardness becomes insufficient in some cases. In addition, a usage amount of more than 1,000 parts by mass is not preferred because excellent transparency and an excellent mechanical strength of the allyl ester resin itself may decrease.

[Radical Reactive Resin Composition]

The allyl ester resin composition may contain a radical reactive resin component for the purpose of improving its various physical properties. Examples of such resin component include an unsaturated polyester resin and a vinyl ester resin.

The unsaturated polyester resin is obtained by dissolving a condensation product obtained by an esterification reaction between a polyhydric alcohol and an unsaturated polybasic acid (and, as required, a saturated polybasic acid) in a polymerizable unsaturated compound, such as styrene, as required, and examples thereof may include resins disclosed in "Polyester Resin Handbook", The Nikkan Kogyo Shimbun, Ltd., published in 1988, p. 16-18 and p. 29-37. The unsaturated polyester resin may be produced by a known method.

The vinyl ester resin is also referred to as "epoxy (meth)acrylate", and generally refers to a resin having a polymerizable unsaturated group produced by a ring-opening reaction between a compound having an epoxy group typified by an epoxy resin and a carboxyl group of a carboxyl compound having a polymerizable unsaturated group, such as (meth)acrylic acid, or a resin having a polymerizable unsaturated group produced by a ring-opening reaction between a compound having a carboxyl group and an epoxy group of a polymerizable unsaturated compound having the epoxy group in a molecule thereof, such as glycidyl (meth)acrylate. Details about the resin are disclosed in, for example, "Polyester Resin Handbook", The Nikkan Kogyo Shimbun, Ltd., published in 1988, p. 336-357, and the production of the resin may be performed by a known method.

Examples of the epoxy resin serving as a raw material for the vinyl ester resin include bisphenol A diglycidyl ether and high-molecular-weight homologs thereof, a glycidyl ether of a bisphenol A alkylene oxide adduct, bisphenol F diglycidyl ether and high-molecular-weight homologs thereof, a glycidyl ether of a bisphenol F alkylene oxide adduct, and novolac-type polyglycidyl ethers.
The radical reactive resin components may be used alone, or as a mixture thereof or in combination thereof.

Although the usage amount of any such radical reactive resin component is not particularly limited, the usage amount is preferably from 1 part by mass to 1,000 parts by mass, more preferably from 2 parts by mass to 500 parts by mass, particularly preferably from 5 parts by mass to 100 parts by mass with respect to 100 parts by mass of the allyl ester oligomer.

When the usage amount of the reactive monomer is less than 1 part by mass, for example, a mechanical strength-improving effect derived from the radical reactive resin component is small, and hence the workability deteriorates or the moldability of the composition deteriorates in some cases . In addition, when the usage amount is more than 1,000 parts by mass, the heat resistance of the allyl ester resin itself may not appear.

[Additive]

An additive, for example, a UV absorber, an antioxidant, an antifoaming agent, a leveling agent, a release agent, a lubricant, a water-repellent agent, a flame retardant, a shrinkage reducing agent, or a cross-linking aid may be added to the allyl ester resin composition as required, for the purpose of improving hardness, strength, moldability, durability, or water resistance.

The antioxidant is not particularly limited, and generally used antioxidants may each be used. Of those, a phenol-based antioxidant or an amine-based antioxidant serving as a radical chain inhibitor is preferred, and a phenol-based antioxidant is particularly preferred. Examples of the phenol-based antioxidant include 2,6-t-butyl-p-cresol, 2,6-t-butyl-4-ethylphenol, 2,2'-methylenebis(4-methyl-6-t-butylphenol), and 1,1,3-tris(2-methyl-4-hydroxy-5-t-butylphenyl)butane.

The lubricant is not particularly limited, and generally used lubricants may each be used. Of those, a metal

soap-based lubricant, a fatty acid ester-based lubricant, an aliphatic hydrocarbon-based lubricant, or the like is preferred, and a metal soap-based lubricant is particularly preferred. Examples of the metal soap-based lubricant include barium stearate, calcium stearate, zinc stearate,
magnesium stearate, and aluminum stearate. Those lubricants may be used as a composite thereof.

The UV absorber is not particularly limited, and generally used UV absorbers may each be used. Of those, a benzophenone-based UV absorber, a benzotriazole-based UV absorber, and a cyano acrylate-based UV absorber are preferred, and a benzophenone-based UV absorber is particularly preferred. Examples of the benzophenone-based UV absorber include 2-(2'-hydroxy-5'-methylphenyl)benzotriazole, 2-(2'-hydroxy-5'-butylphenyl)benzotriazole, and 2-(2-hydroxy-3'-t-butylphenyl)benzotriazole.

The additive is not limited to the above-mentioned specific examples, and any additive may be added to the extent that the object or effect of the present invention is not impaired.

[Cured Product of Allyl Ester Resin Composition]

A film- or sheet-shaped substrate excellent in transparency and heat resistance can be obtained by applying light and/or heat to the allyl ester resin composition to cure the composition.

Here, in ordinary cases, the term "film" refers to a product having a thickness of less than 250 μm, and the term "sheet" refers to a product having a thickness of 250 μm or more.

At the time of the production of a film and a sheet from the allyl ester resin composition, any curing method may be selected as long as a certain surface hardness is obtained. In order to obtain a surface hardness equal to or more than the certain value, it is preferred to adopt a photocuring method and a heat curing method, or only the heat curing method after the application of the resin composition in a film shape.

Although a condition and the like at the time of the curing of the allyl ester resin composition are not particularly limited, it is suitable to perform photocuring and heat curing, or the heat curing after the composition has been applied and cast onto a transparent plastic film, such as a polyethylene terephthalate (PET) film or a polyethylene naphthalate (PEN) film, a metal sheet, or a glass plate.

In the case of the photocuring, a UV irradiation method is generally used, and the composition may be irradiated with UV light generated by using, for example, a UV lamp. Examples of the UV lamp include a metal halide lamp, a high-pressure mercury lamp, a low-pressure mercury lamp, a pulse-type xenon lamp, a xenon/mercury mixed lamp, a low-pressure germicidal lamp, an electrodeless lamp, and an LED lamp, and the UV lamps may each be used. Of those UV lamps, a metal halide lamp or a high-pressure mercury lamp is preferred. Although an irradiation condition varies from lamp condition to lamp condition, an irradiation exposure value is preferably from about 20 $mJ/cm^2$ to about 5,000 $mJ/cm^2$. In addition, it is preferred that a reflecting plate of, for example, an ellipse type, a parabola type, or a diffusion type be attached to the UV lamp, and a heat-cutting filter or the like be mounted as a cooling measure thereon. In addition, for the acceleration of its curing, the composition may be irradiated with UV light after having been warmed to from 30°C to 80°C in advance.

In the case of the heat curing, a heating method is not particularly limited, but a heating method excellent in uniformity, such as a hot-air oven or a far-infrared oven, is preferred. A curing temperature is from about 100°C to about 200°C, preferably from 120°C to 180°C. Although a curing time varies depending on a curing method, the curing time is preferably form 0.5 minute to 5 hours in the hot-air oven, and is preferably from 0.5 minute to 60 minutes in the far-infrared oven.

UV curing involving using a photopolymerization initiator, or heat curing involving using an organic peroxide or an azo compound is susceptible to reaction inhibition by oxygen because such curing is a radical reaction. In order to prevent the oxygen inhibition at the time of its curing reaction, after the curable composition has been applied and cast onto a base sheet or a base film, such as a transparent plastic film, a metal sheet, or a glass plate, a transparent cover film is preferably applied onto the curable composition before the performance of its photocuring to set the oxygen concentration of the surface of the cast curable composition to 1% or less. A film satisfying the following conditions needs to be used as the transparent cover film: the film is free of any hole in its surface, has a small oxygen permeability, and can resist heat to be generated at the time of the UV curing or the heat curing. Examples thereof include films of polyethylene terephthalate (PET), polyethylene naphthalate (PEN), polycarbonate (PC), polypropylene (PP), an acetate resin, an acrylic resin, polyvinyl fluoride, polyamide, polyarylate, polyethersulfone, and a cycloolefin polymer (norbornene resin), and these films may be used alone or in combination thereof.

The surfaces of the base sheet or the base film onto which the allyl ester resin composition is applied and cast, and the transparent cover film may each be subjected to an easy-release treatment, such as coating with a silicone resin or a fluorine resin, so that a cured product obtained by curing the resin composition can be easily peeled.

The allyl ester resin composition is liquid, and hence the application thereof, coating therewith, or the like can be performed by using a known coating device so that a predetermined shape or form may be obtained. Examples of the application method include gravure coating, roll coating, reverse coating, knife coating, die coating, rip coating, doctor

coating, extrusion coating, slide coating, wire bar coating, curtain coating, and spinner coating. The viscosity range of the allyl ester resin composition at the time of application, coating, or forming is preferably a range of from 100 mPa·s to 100,000 mPa·s at normal temperature.

A sheet-shaped transparent substrate formed of the allyl ester resin obtained by applying light and/or heat to the allyl ester resin composition to cure the composition serves as a transparent layer of a light control panel. The pitch of the reflective layers (metal film layers) of the light control panel substantially corresponds to the thickness of the transparent layer, and the thickness is preferably from 0.2 mm to 0.5 mm. Accordingly, the thickness of the allyl ester resin sheet is also preferably from 0.2 mm to 0.5 mm.

The surface hardness of the transparent substrate is preferably 2H in terms of pencil hardness. When the surface hardness is less than 2H, for example, the following inconvenience may occur: the substrate is flawed during a working process.

In addition, it is desired that the transparent layer have a high total light transmittance and a low haze value in addition to the pencil hardness. In this case, when the layer is used in a light control panel, a high-definition reflected image is obtained. The total light transmittance is preferably 90% or more, more preferably 91% or more. The haze value is preferably 1% or less, more preferably 0.5% or less.

Further, an "Abbe number" and "smoothness" are also important characteristics for obtaining a high-definition image. The Abbe number is a numerical value representing the wavelength dependence of a refractive index, and when the Abbe number is excessively low, an image may be unclear. The Abbe number is preferably 40 or more, more preferably 50 or more.

The smoothness is important particularly in a surface having formed thereon a metal film, and when the smoothness is excessively low, there is a risk in that an image appears to be blurred and hence a texture is impaired. When the smoothness is expressed in an arithmetic average roughness "Ra", the smoothness is preferably less than 10 nm, more preferably less than 5 nm, particularly preferably less than 2 nm.

Further, the specific gravity of the substrate is preferably as low as possible from the viewpoint of handleability.

[Metal Film]

Next, a metal film layer of a light control panel is described. Although the kind of metal constituting the metal film layer is not particularly limited, a metal having a high reflectance for visible light is desired. In addition, in order that the color tone of the original video of a reflected image maybe accurately reflected, a colorless (so-called silver) metal is desired. Examples of the metal that may be used include aluminum, silver, gold, titanium, nickel, copper, tin, indium, and chromium, and alloys thereof. Of those, aluminum, silver, or chromium is preferred.

[Production of Allyl Ester Resin Substrate having Metal Film]

Although a method of forming a metal film on the surface of a sheet-shaped allyl ester resin substrate is not particularly limited, examples thereof include a transfer method, a dry coating method, and a wet coating method. The transfer method is, for example, a method involving bonding a metal foil to the substrate with an adhesive, and examples of the dry coating method include a vacuum deposition method, a sputtering method, an ion plating method, and an ion beam sputtering method. The wet coating method is, for example, a wet plating method. A dry method, such as the vacuum deposition method or the sputtering method, is preferred for uniformly forming a thin film on the surface of the substrate. The metal film is formed on one surface, or each of both surfaces, of the sheet-shaped allyl ester resin substrate, and the formation on one surface and that on the other surface may be simultaneously performed.

[Production of Light Control Panel]

A light control panel having a large number of band-shaped planar light-reflecting portions can be produced by laminating a large number of allyl ester resin sheets each having a metal film formed on one surface, or each of both surfaces, thereof as described in the foregoing, and cutting and processing the laminate in a direction vertical to the lamination direction (FIG. 1).

The lamination number of the allyl ester resin sheets each having formed thereon the metal film is preferably 100 or more, more preferably 500 or more, particularly preferably 700 or more. As the lamination number of the allyl ester resin sheets each having formed thereon the metal film increases, it becomes easier to produce a large light control panel.

A pressure-sensitive adhesive or an adhesive may be used in the lamination of the allyl ester resin sheets each having formed thereon the metal film. Examples of the kind of the pressure-sensitive adhesive include rubber-based, acrylic-based, silicone-based, and urethane-based pressure-sensitive adhesives. Examples of the kind of the adhesive include : solvent-based adhesives, such as a phenol resin and vinyl acetate-based and chloroprene rubber-based adhesives; curing reaction-type adhesives, such as epoxy resin-based, acrylic resin-based, and silicone rubber-based adhesives; and hot melt-type adhesives, such as polyolefin-based, ethylene-vinyl acetate copolymer resin-based, polyester resin-based, urethane resin-based, polyamide resin-based, and styrene butadiene rubber-based adhesives.

When allyl ester resin sheets each having a metal film formed only on one surface thereof are laminated, a colorless and transparent pressure-sensitive adhesive or adhesive is desirably used.

Various methods may each be used as a method of cutting the laminate of the allyl ester resin sheets each having formed thereon the metal film. Specifically, the processing may be performed by a processing method, such as a sawing machine method, a contouring machine method, a shirring method, a lathe method, a router processing, a gas cutting method, a laser cutting method, a plasma cutting method, or a water jet cutting method.

The laminate is preferably cut with a wire saw out of those methods, and a fixed abrasive grain system involving cutting the laminate with a wire having fixed thereto a diamond abrasive grain is particularly preferred. Unlike the cutting of a typical resin alone, in the cutting of the laminate of the allyl ester resin sheets each having formed thereon the metal film, when a bonding strength between the respective constituent members is insufficient, part of the constituent members may be peeled. In view of the foregoing, when any one of the above-mentioned cutting methods is used, a stress leading to the peeling of various members can be reduced, and a cutting loss can be suppressed to the minimum.

Examples

Now, the present invention is specifically described by way of Synthesis Example, Example, and Reference Examples. However, the present invention is not limited to the descriptions thereof.

The total light transmittances, pencil hardnesses, and the like of films and sheets described in Example and Reference Examples were measured by the following methods.

[Total Light Transmittance]

A total light transmittance was measured with a haze meter NDH 5000 manufactured by Nippon Denshoku Industries Co., Ltd. in conformity with JIS K-7361-1.

[Haze]

A haze value was measured with a haze meter NDH 5000 manufactured by Nippon Denshoku Industries Co., Ltd. in conformity with JIS K-7136.

[Abbe Number]

Refractive indices for a C-line (656 nm), a D-line (589 nm), and an F-line (486 nm) were measured with a multi-wavelength Abbe refractometer DR-M4 manufactured by Atago Co., Ltd., and an Abbe number in the D-line was calculated from the following calculation formula.

$$\nu D = (nD - 1)/(nF - nC)$$

[Pencil Hardness]

A pencil hardness was measured with an electric system pencil scratch hardness tester No. 553-M manufactured by Yasuda Seiki Seisakusho, Ltd. in conformity with JIS K 5600-5-4.

[Flexibility]

A sheet was pressed against each of the rods having various diameters of a cylindrical mandrel to be bent by 180°, and the presence or absence of its fracture was observed. The observation was initiated from the rod having the largest diameter, and whether or not the flexibility of the sheet was satisfactory was judged on the basis of the diameter of a rod at the time of the occurrence of the fracture. As the diameter at the time of the fracture becomes smaller, the flexibility can be said to be better.

[Specific Gravity]

A specific gravity was measured with an electronic densimeter manufactured by Alfa Mirage by an underwater

substitution method. A measurement sample measured 50 mm long by 50 mm wide by a predetermined value (mm) thick, and a measurement temperature was set to 23°C.

[Arithmetic Average Roughness (Ra)]

An arithmetic average roughness (Ra) was measured with a scanning probe microscope Nanocute manufactured by Hitachi High-Tech Science Corporation.

Synthesis Example 1:

1,625 g of diallyl 1,4-cyclohexanedicarboxylate, 167 g of trimethylolpropane, and 0.8 g of dibutyltin oxide were loaded into a 2-liter three-necked flask with a distillation device, and in a stream of nitrogen, the mixture was heated at 180°C while allyl alcohol generated was distilled off to the outside of a system. When the amount of allyl alcohol that had been distilled off reached about 170 g, a pressure in the reaction system was gradually reduced to 6.6 kPa over 4 hours to increase the distillation rate of allyl alcohol. When substantially no distillation occurred, the pressure was set to 0.5 kPa and the mixture was subjected to a reaction for 1 hour. After that, the resultant was cooled to room temperature to provide an allyl ester oligomer A.

Example 1:

10 Parts by mass of pentaerythritol tetraacrylate (manufactured by Shin-Nakamura Chemical Co., Ltd., "NK ESTER A-TMMT"), 0.5 part by mass of 1-hydroxycyclohexyl phenyl ketone (manufactured by Ciba Specialty Chemicals (current BASF Japan Ltd.), "IRGACURE (trademark) 184"), and 1 part by mass of PERHEXYL (trademark) I (NOF Corporation) were added to 100 parts by mass of the allyl ester oligomer A produced in Synthesis Example 1, and the mixture was sufficiently stirred to provide an allyl ester resin composition B. The top of a polyethylene terephthalate (PET) film was coated with the composition B so that its thickness after curing became 0.3 mm. The surface of the application liquid was covered with a cover film made of a PET, and the liquid was irradiated with UV light by using a UV irradiation device (metal halide lamp) under the conditions of 200 mW/cm$^2$ and 800 mJ/cm$^2$. After that, the resultant was put into a heating furnace set at 150°C for 10 minutes. The resultant was taken out from the heating furnace, and a base film and the cover film were peeled. Thus, a transparent substrate A having a thickness of 0.3 mm was obtained.

Aluminum was deposited from the vapor onto each of both surfaces of the transparent substrate A by a vacuum deposition method. Thus, a substrate C having a thickness of 0.3 mm, the substrate having aluminum films, was obtained. The average reflectance of each of the aluminum-deposited surfaces of the substrate C for light having a wavelength in a region of from 380 nm to 780 nm was 87%.

The measurement results of the transparent substrate A and the substrate C are shown in Table 1 and Table 2, respectively.

The substrate C was cut and processed into a sheet shape measuring 10 cm by 10 cm with a carbon dioxide gas laser. 35 Sheets thus obtained were superimposed and bonded to each other with an adhesive EXTRA 4000 manufactured by Toagosei Co., Ltd. to produce a laminated product. The laminated product was cut with a diamond wire saw so as to have a thickness of 2 mm. Thus, a light control panel measuring about 10 cm by about 10 cm, the panel having metal film layers at intervals of 0.3 mm, was obtained.

Two light control panels of this type were produced, and were fixed so that their laminated surfaces were perpendicular to each other. Thus, an optical imaging device was obtained.

Reference Example 1:

1 part by mass of PEROCTA (trademark) O (manufactured by NOF Corporation) was added to 100 parts by mass of tricyclodecane dimethanol diacrylate (manufactured by Shin-Nakamura Chemical Co., Ltd. , A-DCP), and the mixture was stirred at room temperature until the mixture became homogeneous. The mixture was poured into a mold produced by using a glass plate and a 0.35-millimeter thick spacer made of a PET film, and was cured at 65°C over 1 hour and at 100°C over 2 hours . After having been removed from the mold, the resultant was finally cured at 130°C over 1 hour to provide a cured product as being an acrylic substrate. The cured product was subjected to the same measurements as those of Example 1. The cured product had a flexibility of 12 mm and hence did not show sufficient flexibility.

A protective film made of a PET was bonded to one surface of the cured product, and aluminum was deposited from the vapor onto one surface on the opposite side by a vacuum deposition method. Thus, a substrate having an aluminum film was obtained. The substrate had a flexibility of 12 mm and hence did not show sufficient flexibility.

The measurement results of the cured product as being the acrylic substrate and the aluminum-deposited

substrate are shown in Table 1 and Table 2, respectively.

Reference Examples 2 and 3:

A commercial soda lime glass plate and a commercial polycarbonate plate were also subjected to the same measurements as those of Example 1. The results are shown in Table 1.

Table 1

| [Physical property values of substrate for deposition] | | | | |
|---|---|---|---|---|
| | Substrate A of Example 1 | Substrate of Reference Example 1 | Reference Example 2 Soda lime glass | Reference Example 3 Polycarbonate (PC) |
| Thickness (mm) | 0.3 | 0.3 | 0.4 | 0.3 |
| Total light transmittance (%) | 92 | 92 | 92 | 90 |
| Haze (%) | 0.4 | 0.4 | 0.3 | 0.3 |
| Abbe number | 53 | 58 | 58 | 30 |
| Pencil hardness | 2H | H | 9H | 2B |
| Flexibility (fracture diameter) (mm) | 4 | 12 | Unmeasurable | Less than 2 |
| Specific gravity | 1.2 | 1.2 | 2.5 | 1.2 |
| Ra (nm) | 1.2 | - | - | - |

Table 2

| [Physical property values of substrate having metal film] | | |
|---|---|---|
| | Substrate C having metal films of Example 1 | Substrate having metal film of Reference Example 1 |
| Average reflectance (380 to 780 nm) (%) | 87 | 87 |
| Flexibility (fracture diameter) (mm) | 4 | 12 |

As can be seen from Table 1 and Table 2, a sheet formed by using the allyl ester resin of the present invention is lightweight, is excellent in optical characteristics and surface hardness, and has satisfactory flexibility, and as a result, hardly breaks, and hence the sheet is suitable for a transparent layer of a light control panel. Meanwhile, it is found that the acrylic substrate of Reference Example 1 is liable to break when deformed because the substrate is poor in flexibility. The glass plate of Reference Example 2 involves no problems in terms of surface hardness and optical characteristics, but involves a drawback in that the glass is heavy and is liable to break. The polycarbonate plate of Reference Example 3 has a low surface hardness and is hence liable to be flawed. In addition, the plate is poor in Abbe number. Therefore, a light control panel using each of the substrates of Reference Examples is inferior in all respects including a weight, the ease of breakage, and optical characteristics to a light control panel using the transparent substrate of the present invention.

Industrial Applicability

The allyl ester resin substrate having metal films of the present invention is useful for a light control panel because the substrate has a high surface hardness, is lightweight, and is excellent in strength.

Reference Signs List

1 light control panel
2 transparent substrate (cured product layer)
3 metal film
4 adhesive layer
5 laminate
6 transparent protective plate
7 optical imaging device

## Claims

1. A light control panel, including a plurality of band-shaped planar light-reflecting portions in each of which layers of a cured product of an allyl ester resin composition and metal film layers are alternately laminated in a plane direction (direction vertical to a thickness).

2. The light control panel according to claim 1, in which the allyl ester resin composition contains an allyl ester oligomer having a group represented by the formula (2) as a terminal group, and having a structure represented by the formula (3) as a structural unit:

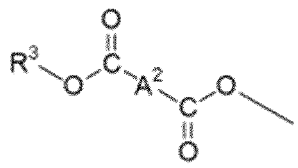

(2)

where $R^3$ represents an allyl group or a methallyl group, and $A^2$ represents one or more kinds of organic residues each having an alicyclic structure and/or an aromatic ring structure derived from a dicarboxylic acid;

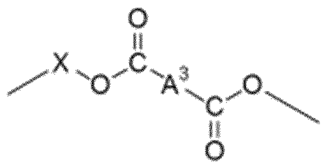

(3)

where $A^3$ represents one or more kinds of organic residues each having an alicyclic structure and/or an aromatic ring structure derived from a dicarboxylic acid, and X represents one or more kinds of organic residues each derived from a polyhydric alcohol, provided that X may further have, through an ester bond, a branched structure having a group represented by the formula (2) as a terminal group, and having a structure represented by the formula (3) as a structural unit.

3. The light control panel according to claim 2, in which the allyl ester resin composition contains at least a monomer having a crosslinkable group that is trifunctional or more, selected from trimethylolethane tri(meth)acrylate, trimethylolpropane tri(meth)acrylate, pentaerythritol tri(meth)acrylate, tri(meth)allyl isocyanurate, tri(meth)allyl cyanurate, triallyl trimellitate, diallyl chlorendate; pentaerythritol tetra(meth)acrylate, ditrimethylolpropane poly(meth)acrylate, or dipentaerythritol poly(meth)acrylate.

4. The light control panel according to any one of claims 1 to 3, in which the metal film layers are each selected from aluminum, silver, and chromium.

5. The light control panel according to any one of claims 1 to 4, in which the layers of the cured product of the allyl ester resin composition each have a thickness of from 0.2 mm to 0.5 mm.

6. An optical imaging device, including the two light control panels described in any one of claims 1 to 5, in which the band-shaped planar light-reflecting portions of a first light control panel and a second light control panel are arranged to be perpendicular to each other.

## Patentansprüche

1. Lichtsteuertafel, die eine Vielzahl von bandförmigen, ebenen, lichtreflektierenden Abschnitten enthält, in denen jeweils Schichten eines ausgehärteten Produkts aus einer Allylesterharzzusammensetzung und Metallfilmschichten abwechselnd in einer Ebenenrichtung (Richtung senkrecht zu einer Dicke) laminiert sind.

2. Lichtsteuertafel nach Anspruch 1, bei der die Allylesterharzzusammensetzung ein Allylester-Oligomer mit einer Gruppe der Formel (2) als Endgruppe und mit einer Struktur der Formel (3) als Struktureinheit enthält:

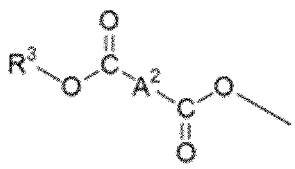

(2)

wobei $R^3$ eine Allylgruppe oder eine Methallylgruppe darstellt und $A^2$ eine oder mehrere Arten von organischen Resten darstellt, die jeweils eine alizyklische Struktur und/oder eine von einer Dicarbonsäure abgeleitete aromatische Ringstruktur haben;

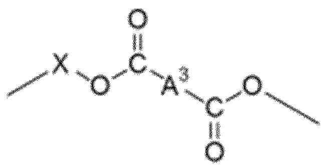

(3)

worin $A^3$ eine oder mehrere Arten von organischen Resten darstellt, die jeweils eine alizyklische Struktur und/oder eine von einer Dicarbonsäure abgeleitete aromatische Ringstruktur aufweisen, und X eine oder mehrere Arten von organischen Resten darstellt, die jeweils von einem mehrwertigen Alkohol abgeleitet sind, mit der Maßgabe, daß X ferner über eine Esterbindung eine verzweigte Struktur mit einer Gruppe der Formel (2) als Endgruppe und mit einer Struktur der Formel (3) als Struktureinheit aufweisen kann.

3. Lichtsteuertafel nach Anspruch 2, bei der die AllylesterHarzzusammensetzung mindestens ein Monomer mit einer vernetzbaren tri- oder höherfunktionellen Gruppe enthält, die unter Trimethylolethantri(meth)acrylat, Trimethylolpropantri-(meth)acrylat, Pentaerythrittri(meth)acrylat, Tri(meth)allylisocyanurat, Tri(meth)allylcyanurat, Triallyltrimellitat, Diallylchlorendat; Pentaerythrit-Tetra(meth)acrylat, Ditrimethylolpropan-Poly(meth)acrylat oder Dipentaerythrit-Poly(meth)acrylat ausgewählt ist.

4. Lichtsteuertafel nach einem der Ansprüche 1 bis 3, bei dem die Metallfilmschichten jeweils aus Aluminium, Silber und Chrom ausgewählt sind.

5. Lichtsteuertafel nach einem der Ansprüche 1 bis 4, bei der die Schichten des ausgehärteten Produkts der Allylesterharzzusammensetzung jeweils eine Dicke von 0,2 mm bis 0,5 mm aufweisen.

6. Optische Abbildungsvorrichtung, einschließlich zwei der in einem der Ansprüche 1 bis 5 beschriebenen Lichtsteuertafeln, bei denen die bandförmigen, planaren, lichtreflektierenden Teile einer ersten Lichtsteuertafel und einer zweiten Lichtsteuertafel so angeordnet sind, dass sie senkrecht zueinander stehen.

## Revendications

1. Panneau de commande de lumière, incluant une pluralité de parties de réflexion de lumière planes de type bande

dans chacune desquelles des couches d'un produit durci d'une composition de résine d'ester allylique et des couches de film métallique sont stratifiées de manière alternée dans une direction du plan (direction verticale par rapport à une épaisseur).

**2.** Panneau de commande de lumière selon la revendication 1, dans lequel la composition de résine d'ester allylique contient un oligomère d'ester allylique comportant un groupe représenté par la formule (2) en tant que groupe terminal, et ayant une structure représentée par la formule (3) en tant qu'unité constitutive :

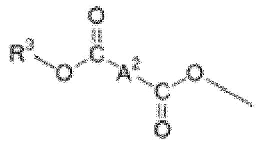
(2)

où $R^3$ représente un groupe allyle ou un groupe méthallyle, et $A^2$ représente un ou plusieurs types de résidus organiques ayant chacun une structure alicyclique et/ou une structure cyclique aromatique dérivée d'un acide dicarboxylique ;

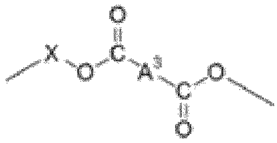
(3)

où $A^3$ représente un ou plusieurs types de résidus organiques ayant chacun une structure alicyclique et/ou une structure cyclique aromatique dérivée d'un acide dicarboxylique, et X représente un ou plusieurs types de résidus organiques chacun dérivé d'un alcool polyhydrique, à condition que X puisse en outre avoir, au travers d'une liaison ester, une structure ramifiée comportant un groupe représenté par la formule (2) en tant que groupe terminal, et ayant une structure représentée par la formule (3) en tant qu'unité constitutive.

**3.** Panneau de commande de lumière selon la revendication 2, dans lequel la composition de résine d'ester allylique contient au moins un monomère comportant un groupe réticulable qui est trifonctionnel ou plus, choisi parmi le tri(méth)acrylate de triméthyloléthane, le tri(méth)acrylate de triméthylolpropane, le tri(méth)acrylate de pentaérythritol, l'isocyanurate de tri(méth)allyle, le cyanurate de tri(méth)allyle, le triméllitate de triallyle, le chlorendate de diallyle ; le tétra(méth)acrylate de pentaérythritol, le poly(méth)acrylate de ditriméthylolpropane ou le poly(méth)acrylate de dipentaérythritol.

**4.** Panneau de commande de lumière selon l'une quelconque des revendications 1 à 3, dans lequel les couches de film métallique sont chacune choisies parmi l'aluminium, l'argent et le chrome.

**5.** Panneau de commande de lumière selon l'une quelconque des revendications 1 à 4, dans lequel les couches du produit durci de la composition de résine d'ester allylique ont chacune une épaisseur de 0,2 mm à 0,5 mm.

**6.** Dispositif d'imagerie optique, incluant les deux panneaux de commande de lumière décrits dans l'une quelconque des revendications 1 à 5, dans lequel les parties de réflexion de lumière planes de type bande d'un premier panneau de commande de lumière et d'un second panneau de commande de lumière sont agencées pour être perpendiculaires les unes aux autres.

[FIG. 1]

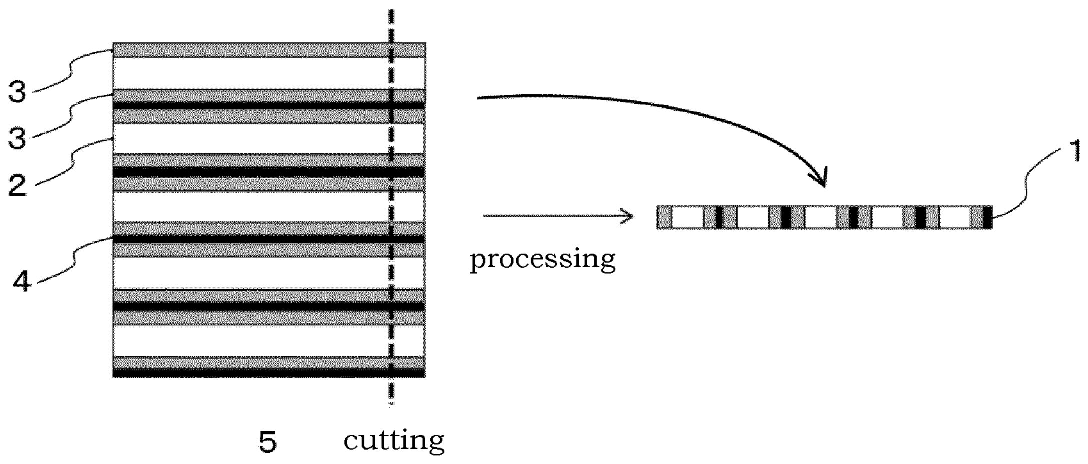


[FIG. 2]

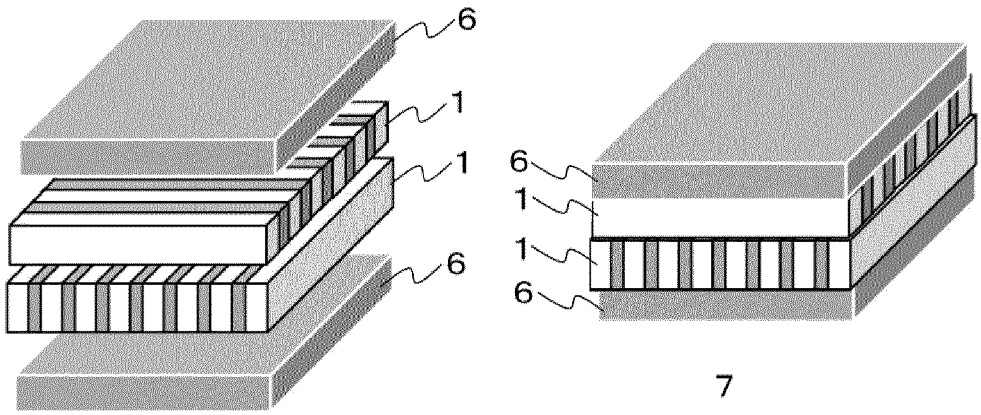

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5437436 B
- JP 2011038081 A
- US 2004236064 A1
- JP 6074239 B


### Non-patent literature cited in the description


- Polyester Resin Handbook. The Nikkan Kogyo Shimbun, Ltd, 1988, 16-18, 29-37
- Polyester Resin Handbook. The Nikkan Kogyo Shimbun, Ltd, 1988, 336-357